(19) Europäisches Patentamt
European Patent Office
Office européen des brevets

(11) EP 0 843 701 B1

(12) **EUROPEAN PATENT SPECIFICATION**

(45) Date of publication and mention
of the grant of the patent:
**04.08.1999 Bulletin 1999/31**

(51) Int Cl.[6]: **C08L 23/16**, C08F 210/18, F16J 15/00

(21) Application number: **96919429.9**

(22) Date of filing: **13.06.1996**

(86) International application number:
**PCT/US96/10339**

(87) International publication number:
**WO 97/00291 (03.01.1997 Gazette 1997/02)**

(54) **IMPROVED ELASTOMERIC EXTRUDED PROFILES**

VERBESSERTE ELASTOMERISCHE STRANGPRESSPROFILE

PROFILS EXTRUDES ELASTOMERES AMELIORES

(84) Designated Contracting States:
**DE FR GB IT NL**

(30) Priority: **14.06.1995 US 490275**

(43) Date of publication of application:
**27.05.1998 Bulletin 1998/22**

(73) Proprietor: **EXXON CHEMICAL PATENTS INC.**
**Baytown, TX 77520-5200 (US)**

(72) Inventors:
• **JOURDAIN, Eric, Paul**
**B-1620 Rhode Saint Genese (BE)**
• **RAVISHANKAR, Periagaram, S.**
**Kingwood, TX 77345 (US)**

(74) Representative: **Dew, Melvyn John et al**
**Exxon Chemical Europe Inc.**
**P.O.Box 105**
**1830 Machelen (BE)**

(56) References cited:
**EP-A- 0 225 063**

• **DATABASE WPI Section Ch, Week 8915 Derwent Publications Ltd., London, GB; Class A17, AN 89-109361 XP002014006 & JP,A,01 054 010 (MITSUI PETROCHEM IND KK), 1 March 1989**
• **RUBBER CHEMISTRY AND TECHNOLOGY, vol. 43, no. 3, 1970, pages 522-48, XP002014038 BALDWIN, F.P. ET AL: "INFLUENCE OF RESIDUAL OLEFIN STRUCTURE OF EPDM VULCANIZATION"**

**Description**

Various embodiments of this invention generally pertain to the field of molded or extruded elastomeric profiles or gaskets. More particularly the present invention is directed to extruded profiles utilizing ethylene, α-olefin, vinyl norbornene elastomeric polymers displaying improved processability and improved vulcanization characteristics.

**BACKGROUND**

Elastomeric polymer compounds and optionally various reinforcement like steel, aluminum or fibers, form the basis of many extruded profiles. Such extruded profiles find application in building construction articles such as window double or single glazing seals, door or window frame seals, expansion joints for curtain wall systems, concrete slabs or concrete walls, clamping joints for window panes, expansion joints for buildings curtain wall gaps or paved floor gaps, flexible lip seals (windows). Extruded profiles may also find use in vehicular parts such as interior trim, gaskets, O-rings, window seals, door seals . Such extruded profiles, used as construction, building or vehicle parts (hereinafter "extruded profiles") are intended generally to provide a seal against fluids such as for instance, air, water. Those seals can be dense or foamed type.

Beginning in the late 1980's, ethylene, alpha-olefin, diene monomer elastomeric polymer based compounds became generally the elastomers of choice for these demanding extruded profile uses, due to their higher filler acceptance, along with their excellent ozone, weathering and temperature resistance, compared to other previously used elastomers such as styrene butadiene rubber (SBR), butadiene rubber (BR), plasticized polyvinyl chloride. These ethylene, alpha-olefin, non-conjugated diene monomer elastomeric polymers, have been most often available incorporating dienes included in the group 5-ethylidene-2-norbornene, 1,4-hexadiene, 1,6 octadiene, 5-methyl-1,4 hexadiene, 3,7-dimethyl-1,6-octadiene, dicyclopentadiene, or combinations thereof, as the diene monomers.

Performance of these extruded profiles in long service life applications such as those discussed above, depends often upon an ability of such materials to retain their flexibility across broad temperature ranges, while such parts are subjected to ultraviolet light, high and low temperature cycles, chemicals of various types (e.g., cleaning chemicals, ice removal chemicals, air contamination in general). An extruded profile should exhibit good sealability in a low temperature environment. Sealability is the property that describes the ability of a extruded profile to maintain contact with other generally non-flexible components such as glass, concrete and metal, during low and high ambient temperatures (down to about -25°C and up over 100°C).

While ethylene, alpha-olefin, non-conjugated diene monomer elastomeric polymers are often the elastomeric polymers of choice for today's extruded profiles, if the state of cure or cross-link density could be improved or increased, many of the important physical properties might be improved. Most notable among the improvements sought would be compression set (reduction). An improvement in compression set would improve sealability, a highly desirable improvement. Additionally, if the elastomer viscosity could be decreased without compromising physical properties, extruded profiles could be extruded faster, permitting better utilization of existing equipment.

Such improved performance, while maintaining improving relatively wide temperature operability, is important, because failure of extruded profiles in applications such as those discussed above can result in inconvenience, as for instance premature replacement of such parts and damage inside the building, due for instance to a water leak or even discomfort due to air leakage in high rise buildings. Performance specifications of extruded profiles intended for building/ construction or vehicular use are targeted toward the best elasticity and service life at high temperature to cover 10 year guarantees on building components. Also it focuses on good elasticity retention at low temperature to insure the sealing properties in winter as well as to make sure that the expansion joint fulfills its function after contraction or dilatation of the panels due to thermal variation or building movement. So high elastomeric polymer concentration in extruded profile compounds are generally the norm due to the need for higher elasticity (elongation and/or compression set). These facts combined with the needs of the extruded profile part manufacturer to produce a high quality part, at low cost, indicate a need for ever higher performance and manufacturing standards for elastomeric polymers, compounds made from these elastomeric polymers, and parts such as extruded profiles made from these compounds. The most common specification for these types of construction seals is described in the German DIN 7863 for black window seal.

To meet these higher end use requirements, peroxide increasingly is the cure system of choice for the ethylene, alpha-olefin, diene monomer elastomeric polymer systems. Now the part or extruded profile manufacturer's and the part user's primary concerns are with improving the already broad service temperature ranges and expected service life of extruded profiles made from ethylene, alpha-olefin, diene monomer elastomeric polymers and their compounds, as well as improving compression set.

Concurrent with the higher specifications required by government agencies, architects, extruded profile manufacturers continue to look for improvements in their manufacturing economies, while maintaining the high quality demand of extruded profiles. Improving manufacturing economics is generally an area where often improved rates of manufacture, and lowering raw material costs are most attractive. Because of the need for a substantially full cure in the extruded profile manufacturing process to generally minimize premature extruded profile failures, extruded profile manufacturers generally do not adjust the curative levels of their extruded profile compounds. Thus the part fabricator must balance the optimum properties of the end use extruded profile, with the need to improve or reduce manufacturing costs.

There is a commercial need therefore for an elastomeric polymer, that when compounded into a extruded profile formulation can meet or exceed building code specifications, offer longer life, as well as offer improved processability, good low temperature sealability at potentially lower curative levels, and the resultant manufacturing economies.

## SUMMARY

We have discovered that inclusion of an ethylene, $\alpha$-olefin, vinyl norbornene elastomeric polymer in compounds intended for use in extruded profile applications, can provide advantages in the compounding, and curing of extruded profiles, as well as advantages in the use performance of the extruded profiles. These advantages include higher cross-link density, and more complete cures, leading generally to longer useful life, good compression set at high (100°C) and low temperatures (-25°C) and better retention of properties after heat and air aging. We have thus found that the above mentioned disadvantages associated with prior suggested solutions to the problems of obtaining extruded profiles having a broader range of useful temperatures, improved compression set, while improving processing and or processing economics, can generally be solved by the elastomeric polymers, articles made from these elastomeric polymers, and methods for making extruded profiles of various embodiments of our invention.

The elastomeric polymer comprises ethylene, an alpha-olefin, and vinyl norbornene. These elastomeric polymers, compounds made from them, and automobile or extruded profiles made from these compounds are contemplated. We will show that these materials satisfy the need disclosed above for improved wide temperature performance and environmental aging at both low and high ambient temperatures, and with the added requirement of resisting deterioration due to ultra violet deterioration, chemical attack, improved processability, improved cure state or cross-link-density. The extruded profile will comprise an ethylene, alpha-olefin, vinyl norbornene elastomeric polymer (either by itself as the sole elastomeric polymer or in combination with other peroxide curable elastomeric polymers), where the elastomeric polymer has an ethylene content in the range of from 50 to 90 mole percent, a vinyl norbornene content in the range of from 0.2 to 5 mole percent, and an alpha-olefin in the range of from 10 to 50 mole percent based on the total moles of the elastomeric polymer, preferred alpha-olefins are propylene, 1-butene, hexene-1 and octene-1. Wherein a compound made utilizing such an elastomeric polymer has: a) ML(1+4) 100°C below 90, b) a MH-ML above 60, c) a hardness up 85 Shore A (after press cure at 180°C for 6 min.) generally above 45, d) a tensile strength above 7.5 MPa measured on lab slabs after curing in press for 6 minutes at 180°C, e) a compression set below 35 percent after 22 hours at 100°C, a compression set below 90 percent after 22 hours at -25°C for 80 Shore A profile, a compression set below 80 percent after 22 hours at -25°C for 70 Shore A profile, below 70 percent after 22 hours at -25°C for 60 Shore A compounds, below 60 percent after 22 hours at -25°C for 50 Shore A compounds, f) a resistance to 100°C air aging after 7 days and g) a compound hardness increase below +10 points after 7 days at -10°C.

## BRIEF DESCRIPTION OF THE DRAWINGS

These and other features, aspects, and advantages of the present invention will become better understood with regard to the following descriptions, appended claims, and accompanying drawings where:

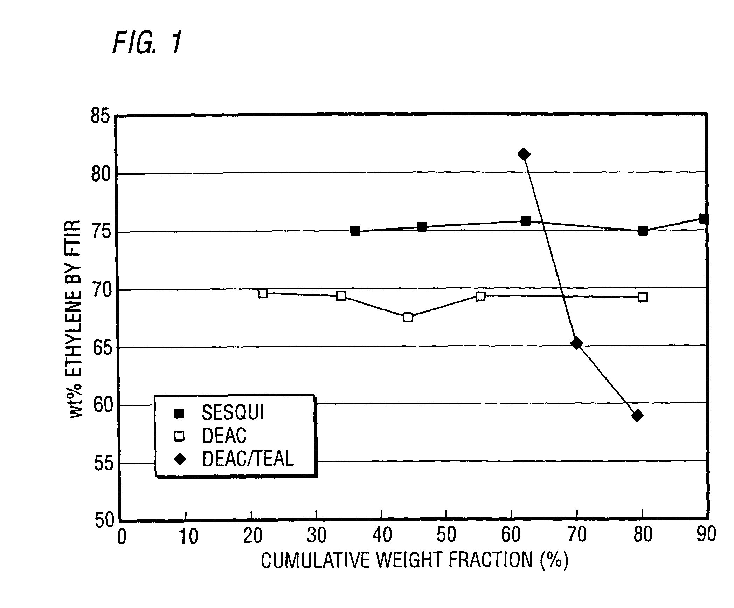

**Figure 1** shows co-catalyst influence on polymer compositional distribution.

## DESCRIPTION

### Introduction

Various embodiments of our present invention concern certain classes ethylene, $\alpha$-olefin, vinyl norbornene elastomeric polymers, extruded profiles fabricated therefrom, and their uses. These elastomeric polymers and compounds made from them have unique characteristics which make them well suited for use in certain applications. Extruded profiles, construction profiles and automotive parts, made from these compounds, exhibit improved resistance to deterioration in outside environments when compared to extruded profiles based on molded and/or extruded parts made from previously available materials, such as ethylene $\alpha$-olefin, diene monomer elastomers containing, for instance, dienes included in the group 5-ethylidene-2-norbornene, 1,4-hexadiene, 1,6 octadiene, 5-methyl-1,4 hexadiene, 3,7-dimethyl-1,6-octadiene, dicyclopentadiene, or combinations thereof, as the diene monomers as well as styrene butadiene rubbers, butadiene rubbers, and compounds derived from them. A detailed description of certain preferred elastomeric polymers for use in fabricating such extruded profiles, that are within the scope of our invention, preferred methods of producing the elastomeric polymers, and the preferred applications of the molded or extruded parts follow.

Those skilled in the art will appreciate the numerous modifications to these preferred embodiments can be made without departing from the scope of the invention. For example, although the properties of extruded profiles are used to exemplify the attributes of the polymers of the present invention, the polymers have numerous other uses. To the extent that our description is specific, this is solely for the purpose of illustrating preferred embodiments of our invention and should not be taken as limiting our invention to these specific embodiments.

The use of sub-headings in the description is intended to assist the reader and is not intended to limit the scope of our invention in any way.

It has been discovered that the inclusion of vinyl norbornene as the non-conjugated diene component of an ethylene, alpha-olefin, diene monomer elastomeric polymer portion of a peroxide cured extruded profile compound, produces extruded profile having a higher cure state, generally a lower curative (peroxide) level to attain the same or improved cure state based on an equivalent non-conjugated diene (where the diene is other than vinyl norbornene) content in an elastomeric polymer, improved compression set, low temperature sealability, competitive air aging results. Additionally, the ethylene, alpha-olefin, vinyl norbornene elastomeric polymers of certain embodiments of the present invention on which the extruded profile compounds are based, will generally need lower levels of diene to achieve similar or improved physical properties when compared to extruded profiles made from previously available ethylene, alpha-olefin, diene monomer elastomeric polymers based on dienes other than vinyl norbornene. The lower level of diene may lead to better heat aging, extending the temperature operating range of extruded profile based on certain embodiments of the present invention, when compared with materials previously available. This feature permits the use of materials such as those described in the present invention in extruded profile over a generally wide range of temperatures and for long useful part life.

## DEFINITION OF TERMS AND TESTS

| Parameter | Units | Test and Specification DIN 7863 | | | | |
|---|---|---|---|---|---|---|
| Mooney Viscosity (EPDM) | ML1+8, 125° C,MU | ASTM D 1646 | | | | |
| Ethylene, weight % | % | ASTM D 3900 | | | | |
| Ethylidene Norbornene | % | Fourier Transform - Infra Red | | | | |
| Dicyclopentadiene | % | Fourier Transform - Infra Red | | | | |
| Vinyl Norbornene | % | Fourier Transform - Infra Red / N.M.R | | | | |
| Mooney Viscosity (compound) | ML1+4, 100° C,MU | ASTM D1646 | | | | |
| Scorch time Mooney | $T_s$5, 125°C, minute | ASTM D1646 | | | | |
| Oscillating Disk Rheometer | 180° C,±3°arc | ASTM D 2084 | | | | |
| ML | daN.m | | | | | |
| MH | daN.m | | | | | |
| MH-ML | daN.m | | | | | |
| ts2 | minute | | | | | |
| Tc 90 | minute | | | | | |
| cure rate | daN.m/min | | | | | |
| **Physical Properties press cured 6 min. @ 180° C** | | | 50±5 | 60±5 | 70±5 | 80±5 |
| Hardness | Shore A | ASTM D 2240 | 50±5 | 60±5 | 70±5 | 80±5 |
| Modulus 100% | MPa | ASTM D 412 die C | >7.5 | >7.5 | >7.5 | >7.5 |
| Tensile Strength | MPa | | >300 | >200 | >200 | >150 |
| Elongation at Break | % | | | | | |
| **Hot Air Aging, 7 days @ 100°C** | | | | | | |
| Hardness | Shore A | ASTM D 2240 | +15,-5 max | +15,-5 max | +15,-5 max | +10,-5 max |
| Tensile change | % | ASTM D 412 die C | <25% | <25% | <25% | <25% |
| Elongation at break change | % | | <50% | <50% | <50% | <50% |
| Hardness increase after 10 days @ -10°C | Shore A | ASTM D2240 | <+10 | <+10 | <+10 | <+10 |
| **Compression Set** | | ASTM D395 method "B" | | | | |
| Press Cured 8 minutes at 180°C 22 hrs @ 100° C,25% deflection | % | | <35% | <35% | <35% | <35% |
| 22 hours @ -25°C, 25% deflec. | % | | <60% | <70% | <80% | <90% |

The ability to combine extruded profile compounds which have improved processability, (lower head pressure in extruders, during the extrusion process and therefore have a lower potential risk of premature vulcanization) generally leading to more consistent and smoother batches during compounding, with fuller, more complete cure and the resultant improved physical properties, and wider operating temperature range, for the finished extruded profile has heretofore been generally difficult to attain.

Extruded profiles manufactured based on the elastomeric polymers of certain embodiments of the present invention will include ingredients that will be well known to those of ordinary skill in the art. Such ingredients include, but are not limited to, carbon black, plasticizers, process aids, waxes, antioxidants, accelerators, and curatives.

Included in the extruded profiles contemplated by certain embodiments of the present invention, but not limited thereto are extruded profiles used in such applications as building and or construction articles such as window double or single glazing seals, door or window frame seals, expansion joints for curtain wall systems, concrete slabs or concrete walls, clamping joints for window panes, expansion joints for buildings curtain wall gaps or paved floor gaps, flexible lip seals (windows). Extruded profiles may also find use in vehicular parts such as interior trim, gaskets, O-rings, window seals, door seals. Such extruded profiles, used as construction, building or vehicle parts (hereinafter "extruded profiles") are intended generally to provide a seal against fluids such as for instance, air, water.

## The Ethylene, Alpha-Olefin, Vinyl Norbornene Elastomer

The ethylene, alpha-olefin, vinyl norbornene elastomeric polymer component contains ethylene in the range of from 50 to 90 mole percent ethylene, preferably in the range of from 50 to 70 mole percent, more preferably in the range of from 50 to 65 mole percent based on the total moles of the polymer. The elastomeric polymer contains, in range of from 0.2 to 5.0 mole percent of vinyl norbornene, preferably in the range of from 0.3 to 3.0 mole percent, more preferably in the range of from 0.4 to 2.5 mole percent, most preferably in the range of from 0.4 to 1.0 mole percent. The balance of the elastomeric polymer will generally be made up of an alpha-olefin, selected from the group consisting of propylene, butene-1, hexene-1, 4-methyl-1-pentene, octene-1, decene-1, combinations thereof. The preferred alpha-olefins are propylene, hexene-1 and octene-1, most preferred is propylene. The elastomeric polymer will have an $M_{W\,GPC,LALLS}/M_{n,GPC,DRI}$ above 6, preferably above 8, more preferably above 10, most preferably above 15.

The elastomeric polymer will have a Mooney viscosity ML (1 + 4) 125°C generally in the range of from 20 to 120, preferably in the range of from 30 to 100, more preferably in the range of from 50 to 100, most preferably in the range of from 65 to 100. The polymer will have a branching index (BI) (defined below) generally in the range of from 0.1 to 0.6, preferably in the range of from 0.1 to 0.4, more preferably in the range of from 0.1 to 0.3.

Compounds intended for extruded profile formulations made according to the recipes in the Examples, will have the following ranges of properties:

ML (1+4) 100°C below 90, preferably below 80, more preferably below 70, most preferably below 65.
MH-ML above 60, preferably above 70, more preferably above 80 daN.m.
Tensile Strength above 7.5 MPa preferably above 9 MPa, most preferably above 10 MPa..
Compression set below 35%, preferably below 20%, more preferably below 10%. measured after 22 hours at 100°C under 25% deflection.
Compression set below 70%, preferably below 60%, more preferably below 50%. measured after 22 hours at -25°C under 25% deflection on a 60 shore A compound.
Hardness change below +10 Shore A after 7 days at -10°C, preferably below +8 Shore A and most preferably below +5 Shore A.

## Method of Producing Ethylene, Alpha-Olefin, Vinyl Norbornene Component

The Ziegler polymerization of the pendent double bond in vinyl norbornene incorporated in the polymer backbone is believed to produce a highly branched ethylene, alpha-olefin, non-conjugated diene elastomeric polymer. This method of branching permits the production of ethylene, alpha-olefin, diene monomer elastomeric polymers substantially free of gel which would normally be associated with cationically branched ethylene, alpha-olefin, diene monomer elastomers containing, for instance, ethylidene norbornene as the termonomer. The synthesis of substantially gel-free ethylene, alpha-olefin, non-conjugated diene elastomeric polymer elastomers containing vinyl norbornene is discussed in. Japanese laid open patent applications JP 151758 and JP 210169.

Preferred embodiments of the aforementioned documents to synthesize polymers suitable for this invention are described below:

The catalysts used are $VOCl_3$ (vanadium oxytrichloride) and $VCl_4$ (vanadium tetrachloride) with the later as the preferred catalyst. The co-catalyst is chosen from (i) ethyl aluminum sesqui chloride (SESQUI), (ii) diethyl aluminum chloride (DEAC) and (iii) equivalent mixture of diethyl aluminum chloride and triethyl aluminum (TEAL). As shown in Figure (1), the choice of co-catalyst influences the compositional distribution in the polymer. The polymer with relatively broader compositional distribution may not have as good low temperature properties as relatively narrower compositional distribution polymers. The polymerization is carried out in a continuous stirred tank reactor at 20-65° C at a residence time of 6-15 minutes at a pressure of 7 kg/cm2. The concentration of vanadium to alkyl is from 1 to 4 to 1 to 10. 0.3 to 1.5 kg of polymer is produced per gram of catalyst fed to the reactor. The polymer concentration in the hexane solvent is in the range of 3- 7 percent by weight. Other catalysts and co-catalysts contemplated are discussed in the two Japanese laid open patent applications.

The resulting polymer has the following molecular characteristics:

The inherent viscosities measured in decalin at 135°C are in the range of 1.5 - 3.0 dl/g. The molecular weight distribution ($M_{w\,GPC,LALLS}/M_{n,GPC/DRI}$) (defined below) is >6. The branching index is in the range 0.1 - 0.5.

For peroxide cure applications, vinyl norbornene containing ethylene, alpha-olefin, non-conjugated diene elastomeric polymers require lower levels of peroxide at equivalent or similar diene levels to attain the same cure state compared to ethylene, alpha-olefin, non-conjugated diene elastomeric polymer with, for example, ethylidene norbornene as the non-conjugated diene monomer. Typically 20 to 50 percent lower peroxide consumption can be realized using ethylene, alpha-olefin, vinyl norbornene elastomeric polymers. The efficiency of vinyl norbornene in providing high cross-link density with peroxide vulcanization also permits a reduction in the overall diene level necessary to generally attain the same cure state as ethylene, alpha-olefin, non-conjugated elastomeric polymers where the diene is other than vinyl norbornene. This may result in enhanced heat aging performance, generally owing to lower diene incorporation, as well as a generally different cross linking mechanism. This unique combination of improved processability, lower peroxide usage, and enhanced heat aging are the benefits provided by ethylene, alpha-olefin, vinyl norbornene elastomeric polymers over conventional elastomers containing non-conjugated dienes such as a diene selected from the group consisting of 5-ethylidene-2-norbornene, 1,4-hexadiene, 1,6 octadiene, 5-methyl-1,4 hexadiene, 3,7-dimethyl-1,6-octadiene, dicyclopentadiene, or combinations thereof or the like, including terpolymers or tetrapolymers.

The relative degree of branching in ethylene, alpha-olefin, diene monomer elastomeric polymers is determined using a branching index factor. Calculating this factor requires a series of three laboratory measurements[1] of polymer properties in solutions. These are: (i) weight average molecular weight measured using a low angle light scattering (LALLS) technique $M_{w,LALLS}$; (ii) weight average molecular weight, $M_{w,DRI}$ and viscosity average molecular weight, $M_{V,DRI}$ using a differential refractive index detector (DRI) and (iii) inherent viscosity (IV) measured in decalin at 135° C. The first two measurements are obtained in a gel permeation chromatograph (GPC) using a filtered dilute solution of the polymer in tri-chloro benzene.

An average branching index is defined as:

$$BI = \frac{M_{v,br} \times M_{w,DRI}}{M_{w,LALLS} \times M_{v\,DRI}} \qquad (1)$$

where, $M_{v,br} = k(IV)^{1/a}$; $M_{v,br}$ is viscosity average molecular weight for branched polymer and 'a' is the Mark-Houwink constant (= 0.759 for ethylene, alpha-olefin, non-conjugated diene elastomeric polymer in decalin at 135° C).

From equation (1) it follows that the branching index for a linear polymer is 1.0, and for branched polymers the extent of branching is defined relative to the linear polymer. Since at a constant $M_n$, $(Mw)_{branch} > (M_w)_{linear}$, BI for a branched polymers is less than 1.0, and a smaller BI value denotes a higher level of branching. It should be noted that this method indicates only the relative degree of branching and not a quantified amount of branching as would be determined using direct measurement, i.e N.M.R.

Metallocene catalysis of the above monomers is also contemplated including a compound capable of activating the Group 4 transition metal compound of the invention to an active catalyst state is used in the invention process to prepare the activated catalyst. Suitable activators include the ionizing noncoordinating anion precursor and alumoxane activating compounds, both well known and described in the field of metallocene catalysis.

Additionally, an active, ionic catalyst composition comprising a cation of the Group 4 transition metal compound of the invention and a noncoordinating anion result upon reaction of the Group 4 transition metal compound with the ionizing noncoordinating anion precursor. The activation reaction is suitable whether the anion precursor ionizes the metallocene, typically by abstraction of $R_1$ or $R_2$, by any methods inclusive of protonation, ammonium or carbonium salt ionization, metal cation ionization or Lewis acid ionization. The critical feature of this activation is cationization of the Group 4 transition metal compound and its ionic stabilization by a resulting compatible, noncoordinating, or weakly coordinating (included in the term noncoordinating), anion capable of displacement by the copolymerizable monomers of the invention. See, for example, EP-A-0 277,003, EP-A-0 277,004, U.S. Patent No. 5,198,401, U.S. Patent No. 5,241,025, U.S. Patent No. 5,387,568, WO 91/09882, WO 92/00333, WO 93/11172 and WO 94/03506 which address the use of noncoordinating anion precursors with Group 4 transition metal catalyst compounds, their use in polymerization processes and means of supporting them to prepare heterogeneous catalysts. Activation by alumoxane compounds, typically, alkyl alumoxanes, is less well defined as to its mechanism but is none-the-less well known for use with Group 4 transition metal compound catalysts, see for example U.S. Patent No. 5,096,867.

The synthesis of ethylene, alpha-olefin, vinyl norbornene elastomeric polymers are conducted on a laboratory pilot unit (output 4 Kg/day).

---

[1] VerStrate, Gary "Ethylene-Propylene Elastomers", Encyclopedia of Polymer Science and Engineering. 6, 2nd edition, (1986)

## Other Extruded profile Compound Ingredients

- Carbon black used in the reinforcement of rubber ingredient, generally produced from the combustion of a gas or a hydrocarbon feed and having a particle size from 20 nm to 100 nm for the regular furnace or channel black or from 150 to 350 nm for the thermal black. Levels are generally comprised between 50 and 200 parts per hundred elastomeric polymer (phr).
- Plasticizers such as aliphatic oils (aliphatic or naphetenic) with level generally comprised between 5 and 150 phr.
- Calcium carbonate as a diluting filler to reduce the price of the compound. Level can be comprised between 0 and 150 phr.
- Process aids can be a mixture of fatty acid ester or calcium fatty acid soap bound on a mineral filler. Typical levels are 2 to 10 phr.
- Polyethylene glycol with a molecular weight of 3350 used as process aid. Typical level is 2 to 5 phr
- A desiccant like calcium oxide to prevent the formation of porosity in the profile during the continuous vulcanization process ( melted salt bath) due to the entrapped moisture. Quantity ranges from 2 to 20 phr.
- Coagents and or activators are those used to improve the peroxide cross-link density by acting through an addition mechanism like sulfur, thiuram (TetraMethylThiuramDiSulfide or DiPentamethylenThiuramTetrasulfide) or methacrylate (ethylene dimethacrylate or TriMethylolPropaneTriMethacrylate) and maleimide(HVA)®.
- Curatives: Curing agents generally of the free radical type, including peroxides, like butylperoxybenzene, butyl peroxy-hexane, dicumyl peroxide, butyl peroxy valerate, butyl peroxy methyl cyclohexane. Typical quantity ranges from 1 to 7 phr calculated on a 100 percent active ingredient.

## EXAMPLES

Examples 1 and 2: commercially available ethylene, propylene, ethylidene norbornene and ethylene, propylene dicyclopentadiene elastomeric polymers that are used here generally as comparative examples.

Example 3 and 4 describe various embodiments of our invention.

In all runs, tests are performed on both the uncompounded elastomer and on compounded elastomers. The compounded formulations are standard (high temperature resistant and low temperature flexible) extruded profile formulations for 60 shore A hardness profiles meeting the DIN specification 7863 for black window seal.

| Ingredients | phr |
|---|---|
| Elastomeric Polymer | 100 |
| FEF N 550 carbon black | 125 |
| Calcium carbonate | 15 |
| Aliphatic oil Flexon[2]® 876 | 65 |
| PEG 3350 | 2 |
| Calcium oxide | 15 |
| EDMA[3] | 2 |
| Butyl peroxi isopropyl benzene | 8 |

[2]available from Exxon Corporation
[3]ethylene dimethacrylate

Example 1 is a commercial ethylene, propylene, ethylidene norbornene elastomeric polymer, available from Exxon Chemical Co as Vistalon® 7500,a nominal 49.5 weight percent ethylene, 5.7 weight percent ethylidene norbornene.

Example 2 is a commercial ethylene, propylene, dicyclopentadiene elastomeric polymer, available from DSM Co. as Keltan 520®, a nominal 56 weight percent ethylene, nominal 5 weight percent di cyclo pentadiene.

Example 3 is an ethylene, propylene, vinyl norbornene elastomeric polymer (6268B) with a nominal 47.9 weight percent ethylene content, 1.1 weight percent vinyl norbornene, with the remainder made up of propylene.

Example 4 is an ethylene, propylene vinyl norbornene elastomer (6376A) with a nominal 55 weight percent ethylene content, 2 weight percent vinyl norbornene; with the remainder made up of propylene.
Both examples 3 and 4 were prepared using the VC14/ Ethyl aluminum Sesqui chloride catalyst system disclosed above.

From Tables 1-2 the following information may be obtained:

The Mooney Viscosity of Examples 1 tends to be substantially higher than those of the ethylene, alpha-olefin, vinyl norbornene elastomeric terpolymers of Example 4, indicating a less processable compound. Example 4, in spite of its high molecular weight (demonstrated by Mooney viscosity), shows a compound with a Mooney viscosity in the range of Example 2 made with an elastomeric polymer with lower molecular weight. This aspect provides the ability to prepare a polymer with high molecular weight for good cure state and still easily processable.

Examples 3-4, containing vinyl norbornene, have a higher cure state, indicating a more complete cure, evidenced by a higher cure state MH - ML, generally having greater than 10 - 30 percent greater (MH - ML) than either Examples 1 or 2. Example 3 at the lowest vinyl norbornene content (20% of example 1) has a comparable cure state to the reference Example 1 and a much higher cure state than Example 2 made with dicyclopentadiene containing elastomeric polymer.

Compression set of Examples 1 and 2 (comparative) at 9 and 16 percent respectively, are substantially higher than the highest of Examples 3 - 4.

All the examples show that the ethylene, alpha-olefin, vinyl norbornene elastomeric terpolymer compounds can achieve an identical state of cure with lower diene content as the ethylene, alpha-olefin, ethylidene norbornene elastomeric terpolymers compound and can achieve better state of cure with lower diene content than the ethylene, alpha-olefin, dicyclopentadiene elastomeric terpolymers compounds preferably used in today construction seal profiles.

Although the present invention has been described in considerable detail with reference to certain preferred versions thereof, other versions are possible.

TABLE 1

| COMPOSITION AND MOLECULAR CHARACTERISTICS OF POLYMERS MADE IN SUPPORT OF THE INVENTION | | | | | | | | | |
|---|---|---|---|---|---|---|---|---|---|
| Example | Elastomeric Polymer | Mooney ML (1+8) 125°C | Ethylene (%) | ENB (%) | DCPD (%) | VNB (%) | Mw /Mn | Intrinsic Viscosity | Branching Index |
| *1 | Vistalon® 7500 | 81 | 50.1 | 5.7 | 0 | 0 | 5.1 | 2.55 | 0.5-0.6 |
| *2 | Keltan® 520 | 41 | 56 | 0 | 5 | 0 | 9.1 | 2.1 | N.A |
| 3 | 6268B | 87 | 47.9 | 0 | 0 | 1.1 | 6.2 | 2.48 | 0.5 |
| 4 | 6376A | 74 | 55 | 0 | 0 | 2 | 27 | 1.57 | 0.2 |

* Comparative Examples

TABLE 2

| Compound | 1 | 2 | 3 | 4 |
|---|---|---|---|---|
| Elastomeric Polymer | V7500 | K520 | 6268B | 6376A |
| Rheometer data | | | | |
| Mooney Viscosity ML 1+4 (100°C) | 83 | 61 | 92 | 65 |
| ODR (Monsanto), 180°C, ± 5 Arc | | | | |
| ML daN.m | 16 | 11 | 15 | 11 |
| MH daN.m | 76 | 59 | 83 | 92 |
| MH-ML daN.m | 60 | 48 | 68 | 81 |
| Ts2 minute | 1 | 1.4 | 1 | 1 |
| Tc90 minute | 5.9 | 5.7 | 6.7 | 6.9 |

TABLE 2 (continued)

| Compound | 1 | 2 | 3 | 4 |
|---|---|---|---|---|
| **Physical Properties press cure 6 minutes @ 180°C** | | | | |
| Hardness, Shore A | 71 | 66 | 63 | 62 |
| Modulus 100%, Mpa | 4.1 | 2.7 | 3.4 | 4.1 |
| Tensile Strength, Mpa | 8.8 | 8.0 | 10.2 | 10.1 |
| Elongation at Break, % | 220 | 285 | 480 | 365 |
| **Air Aging days @ 100°C** | | | | |
| Hardness Change, Shore A | +3 | +3 | +3 | +3 |
| Tensile Strength Change, % | -2% | -5% | 0 | 0 |
| Elongation at Break change, % | 0 | 0 | 0 | 0 |
| **Compression Set 25% deflection** | | | | |
| 22 hours @ 100°C, %<br>22 hours @, -25°C,% | 9<br>65 | 16<br>85 | 5<br>45 | 5<br>55 |
| **Cold aging 7 days @ -10°C** | | | | |
| Hardness Change Shore A | +5 | +8 | +3 | +8 |

## Claims

1. An extruded profile comprising:
   a) an ethylene, $\alpha$-olefin, vinyl norbornene elastomeric polymer;

   wherein said elastomer has an $M_w/M_n$ greater than 6;
   wherein a compound made from said elastomeric polymer has a ML(1+4) @ 100°C of less than 90, preferably less than 80, more preferably less than 70;
   wherein said elastomeric polymer has an ethylene content in the range of from 50 mole percent to 90 mole percent, and a vinyl norbornene content in the range of from 0.2 to 5 mole percent, the balance of the elastomeric polymer is made up of an alpha-olefin based on the total moles of said elastomeric polymer;
   wherein said elastomeric polymer has a branching index in the range of from 0.1 to 0.6, preferably in the range of from 0.1 to 0.4, more preferably in the range of 0.1 to 0.3.

2. The extruded profile of claim 1, wherein:
   said compound has;

   i) an MH - ML above 60, preferably above 70, more preferably above 80;
   ii) a compression set after 22 hours @ 100°C below 35 percent, preferably below 20 percent, more preferably below 10 percent; and
   iii) a tensile strength above 7.5 MPa preferably above 9 MPa more preferably above 10 MPa.

3. The extruded profile of claim 1 wherein said alpha-olefin is selected from the group consisting of propylene, butene-1, hexene-1, octene-1, and combinations thereof.

4. The extruded profile of claim 3 wherein said elastomeric polymer includes:

   i) an ethylene content in the range of from 50 to 70 mole percent; and
   ii) a vinyl norbornene content in the range of from 0.3 to 3.0 mole percent;

   wherein said elastomeric polymer has

   a) a ML (1+8) 125°C in the range of from 20 to 120; and

b) a $M_w/M_n$ above 8.

5. The extruded profile of claim 3 wherein said elastomeric polymer includes:

*i)* an ethylene content in the range of from 50 to 65 mole percent;
*ii)* a vinyl norbornene content in the range of from 0.4 to 2.5 mole percent;

wherein said elastomeric polymer has

a) a ML (1+8) 125°C in the range of from 30 to 100;
b) a branching index in the range of from 0.1 to 0.4; and
c) a $M_w/M_n$ above 10.

6. The extruded profile of claim 3 wherein said elastomeric polymer has

a) a ML (1+8) 125°C in the range of from 50 to 100
b) a branching index in the range of from 0.1 to 0.3; and
c) a $M_w/M_n$ above 15.

7. An extruded profile comprising:

an ethylene, alpha-olefin, vinyl norbornene elastomeric polymer, wherein said alpha-olefin is selected from the group consisting of propylene, butene-1, hexene-1, octene- 1 and combinations thereof, wherein said elastomeric polymer includes said ethylene in the range of from 50 to 65 mole percent, and said vinyl norbornene is in the range of from 0.4 to 1.0 mole percent, said mole percents based on the total moles of the elastomeric polymer;
wherein said elastomeric polymer has:

*i)* a $M_w/M_n$ above 10;
*ii)* a ML(1+8) 125°C in the range of from 50 to 100; and
*iii)* a branching index in the range of from 0.1 to 0.3;

wherein an extruded profile compound including said elastomeric polymer has:

a) a Mooney Viscosity ML (1+4) 100°C below 70;
b) a MH-ML above 80 daN.m
c) a compression set after 22 hours @ 100°C below 10 percent; and
d) a tensile strength above 10 MPa.

**Patentansprüche**

1. Extrudiertes Profil, das
a) elastomeres Ethylen/$\alpha$-Olefin/Vinylnorbornen-Polymer, wobei das Elastomer ein $\overline{M}_w/\overline{M}_n$ von mehr als 6 hat, wobei ein aus dem elastomeren Polymer hergestelltes Compound ein ML(1+4)bei 100°C von weniger als 90, vorzugsweise weniger als 80, insbesondere weniger als 70 hat, wobei das elastomere Polymer einen Ethylengehalt im Bereich von 50 Mol.% bis 90 Mol.% und einen Vinylnorbornengehalt im Bereich von 0,2 bis 5 Mol.% hat, wobei der Rest des elastomeren Polymers aus $\alpha$-Olefin gebildet ist, bezogen auf die Gesamtmol an elastomerem Polymer, wobei das elastomere Polymer einen Verzweigungsindex im Bereich von 0,1 bis 0,6, vorzugsweise im Bereich von 0,1 bis 0,4, insbesondere im Bereich von 0,1 bis 0,3 hat.

2. Extrudiertes Profil nach Anspruch 1, bei dem das Compound

i) ein MH - ML über 60, vorzugsweise über 70, insbesondere über 80,
ii) eine bleibende Verformung nach 22 h bei 100°C unter 35 %, vorzugsweise unter 20 %, insbesondere unter 10 %, und
iii) eine Zugfestigkeit über 7,5 MPa, vorzugsweise über 9 MPa, insbesondere über 10 MPa hat.

3. Extrudiertes Profil nach Anspruch 1, bei dem das α-Olefin ausgewählt ist aus der Gruppe bestehend aus Propylen, Buten-1, Hexen-1, Octen-1 und Kombinationen derselben.

4. Extrudiertes Profil nach Anspruch 3, bei dem das elastomere Polymer

> i) einen Ethylengehalt im Bereich von 50 bis 70 Mol.% und
> ii) einen Vinylnorbornengehalt im Bereich von 0,3 bis 3,0 Mol.%

einschließt, wobei das elastomere Polymer

> a) einen ML(1+8) bei 125°C im Bereich von 20 bis 120, und
> b) ein $\overline{M}_w/\overline{M}_n$ über 8 hat.

5. Extrudiertes Profil nach Anspruch 3, bei dem das elastomere Polymer

> i) einen Ethylengehalt im Bereich von 50 bis 65 Mol.%, und
> ii) einen Vinylnorbornengehalt im Bereich von 0,4 bis 2,5 Mol.%

einschließt, wobei das elastomere Polymer

> a) einen ML(1+8) bei 125°C im Bereich von 30 bis 100,
> b) einen Verzweigungsindex im Bereich von 0,1 bis 0,4, und
> c) ein $\overline{M}_w/\overline{M}_n$ über 10

hat.

6. Extrudiertes Profil nach Anspruch 3, bei dem das elastomere Polymer

> a) eine ML(1+8) bei 125°C im Bereich von 50 bis 100,
> b) einen Verzweigungsindex im Bereich von 0,1 bis 0,3, und
> c) ein $\overline{M}_w/\overline{M}_n$ über 15

hat.

7. Extrudiertes Profil, das
elastomeres Ethylen/α-Olefin/Vinylnorbornen-Polymer, wobei das α-Olefin ausgewählt ist aus der Gruppe bestehend aus Propylen, Buten-1, Hexen-1, Octen-1 und Kombinationen derselben, wobei das elastomere Polymer das Ethylen im Bereich von 50 bis 65 Mol.% einschließt und das Vinylnorbornen im Bereich von 0,4 bis 1,0 Mol.% liegt, wobei sich die Molprozente auf die Gesamtmol des elastomeren Polymers beziehen, wobei das elastomere Polymer

> i) ein $\overline{M}_w/\overline{M}_n$ über 10,
> ii) eine ML(1+8) bei 125°C im Bereich von 50 bis 100, und
> iii) einen Verzweigungsindex im Bereich von 0,1 bis 0,3

aufweist, wobei ein extrudiertes Profilcompound, die das elastomere Polymer einschließt,

> a) eine Mooney-Viskosität ML (1+4) bei 100°C unter 70,
> b) ein MH-ML über 80 daN•m,
> c) eine bleibende Verformung nach 22 h bei 100°C unter 10 % und
> d) eine Zugfestigkeit über 10 MPa

aufweist.

## Revendications

1. Profilé extrudé comprenant :

a) un polymère élastomère d'éthylène, d'une alpha-oléfine et de vinyl-norbornène ;

dans lequel ledit élastomère a une valeur de $M_w/M_n$ supérieure à 6 ;

un composé préparé à partir dudit polymère élastomère a une valeur de ML(1+4) à 100°C inférieure à 90, avantageusement inférieure à 80, de préférence inférieure à 70 ;

ledit polymère élastomère a une teneur en éthylène comprise dans l'intervalle de 50 % en mole à 90 % en mole, et une teneur en vinyl-norbornène comprise dans l'intervalle de 0,2 à 5 % en mole, le reste du polymère élastomère étant constitué d'une alpha-oléfine sur la base du nombre total de moles dudit polymère élastomère ;

ledit polymère élastomère a un indice de ramification compris dans l'intervalle de 0,1 à 0,6, avantageusement de 0,1 à 0,4, de préférence de 0,1 à 0,3.

2.   Profilé extrudé suivant la revendication 1, dans lequel :
     ledit composé a :

i) une valeur de MH-ML supérieure à 60, avantageusement supérieure à 70, de préférence supérieure à 80 ;
ii) une déformation sous pression après 22 heures à 100°C inférieure à 35 %, avantageusement inférieure à 20 %, de préférence inférieure à 10 % ; et
iii) une résistance à la traction supérieure à 7,5 MPa, avantageusement supérieure à 9 MPa, de préférence supérieure à 10 MPa.

3.   Profilé extrudé suivant la revendication 1, dans lequel l'alpha-oléfine est choisie dans le groupe consistant en propylène, butène-1, hexène-1, octene-1 et leurs associations.

4.   Profilé extrudé suivant la revendication 3, dans lequel le polymère élastomérique comprend :

i) une teneur en éthylène comprise dans l'intervalle de 50 à 70 % en mole ; et
ii) une teneur en vinyl-norbornène comprise dans l'intervalle de 0,3 à 3,0 % en mole ;

ledit polymère élastomère ayant

a) une valeur de ML (1+8) à 125°C comprise dans l'intervalle de 20 à 120 ; et
b) un rapport $M_w/M_n$ supérieur à 8.

5.   Profilé extrudé suivant la revendication 3, dans lequel le polymère élastomère a :

i) une teneur en éthylène comprise dans l'intervalle de 50 à 65 % en mole ;
ii) une teneur en vinyl-norbornène comprise dans l'intervalle de 0,4 à 2,5 % en mole ;

ledit polymère élastomère ayant

a) une valeur de ML (1+8) à 125°C comprise dans l'intervalle de 30 à 100 ;
b) un indice de ramification compris dans l'intervalle de 0,1 à 0,4 ; et
c) un rapport $M_w/M_n$ supérieur à 10.

6.   Profilé extrudé suivant la revendication 3, dans lequel le polymère élastomère a

a) une valeur de ML (1+8) à 125°C comprise dans l'intervalle de 50 à 100 ;
b) un indice de ramification compris dans l'intervalle de 0,1 à 0,3 ; et
c) un rapport $M_w/M_n$; supérieur à 15.

7.   Profilé extrudé comprenant :
     un polymère élastomère d'éthylène, d'une alpha-oléfine et de vinyl-norbornéne, dans lequel ladite alpha-oléfine est choisie dans le groupe consistant en propylène, butène-1, hexène-1, octène-1 et leurs associations, ledit polymère élastomère comprenant l'éthylène en une quantité comprise dans l'intervalle de 50 à 65 % en mole et le vinyl-norbornène en une quantité comprise dans l'intervalle de 0,4 à 1,0 % en mole, lesdits pourcentages en mole étant basés sur le nombre total de moles du polymère élastomère ;
     dans lequel ledit polymère élastomère a :

i) un rapport $M_w/M_n$ supérieur à 10 ;
ii) une valeur de ML (1+8) à 125°C comprise dans l'intervalle de 50 à 100 ; et
iii) un indice de ramification compris dans l'intervalle de 0,1 à 0,3 ;

un composé pour profilés extrudés comprenant ledit polymère élastomère ayant :

a) une viscosité Mooney ML (1+4) à 100°C inférieure à 70 ;
b) une valeur de MH-ML supérieure à 80 daN.m ;
c) une déformation sous pression après 22 heures à 100°C inférieure à 10 % ; et
d) une résistance à la traction supérieure à 10 MPa.

## FIG. 1